(19) Europäisches Patentamt
European Patent Office
Office européen des brevets

(11)  **EP 1 715 085 B1**

(12)  **EUROPEAN PATENT SPECIFICATION**

(45) Date of publication and mention
of the grant of the patent:
**03.04.2013  Bulletin 2013/14**

(51) Int Cl.:
*C25D 11/04* (2006.01)       *C25D 11/16* (2006.01)
*C25D 11/18* (2006.01)       *C25F 1/04* (2006.01)
*B82Y 30/00* (2011.01)       *B82Y 10/00* (2011.01)

(21) Application number: **06008028.0**

(22) Date of filing: **18.04.2006**

(54) **Method for producing anodized structure**

Verfahren zur Herstellung einer anodisierten Struktur

Procédé pour la fabrication d'une structure anodisée

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **18.04.2005   JP 2005119418
29.07.2005   JP 2005221625**

(43) Date of publication of application:
**25.10.2006   Bulletin 2006/43**

(73) Proprietor: **FUJIFILM Corporation
Minato-ku
Tokyo (JP)**

(72) Inventors:
 • **Tomita, Tadabumi
Yoshida-cho
Haibara-gun
Shizuoka (JP)**
 • **Hotta, Yoshinori
Yoshida-cho
Haibara-gun
Shizuoka (JP)**
 • **Uesugi, Akio
Yoshida-cho
Haibara-gun
Shizuoka (JP)**

(74) Representative: **HOFFMANN EITLE
Patent- und Rechtsanwälte
Arabellastrasse 4
81925 München (DE)**

(56) References cited:
**US-A- 5 747 180          US-A- 6 139 713
US-A1- 2002 109 134     US-A1- 2002 145 826**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

This invention relates to a nanostructure and its production method, and more specifically, to a method for producing a nanostructure using an aluminum member having on a surface thereof an anodized layer containing a plurality of nanopores.

In the technical field of metal and semiconductor thin films, wires, dots, and the like, an electrically, optically, or chemically unique phenomenon is known to occur due to confinement of motions of free electrons in the metals or semiconductors within a size smaller than a certain characteristic length. Such phenomenon is called "quantum mechanical size effect" or simply "quantum size effect." Functional materials employing such unique phenomenon are under active research and development. More specifically, materials having a structure smaller than several hundred nanometers in size are called "microstructures" or "nanostructures", and these materials are the subject of one of the current efforts in material development.

Exemplary methods for manufacturing such microstructures include processes in which a nanostructure is directly manufactured by a semiconductor processing technique such as photolithography, electron beam exposure, X-ray exposure, or other fine patterning formation technique.

Of particular note is the considerable amount of research being conducted today on the process for producing nanostructures having an ordered microstructure.

One method of forming an ordered structure in a self-ordered manner involves subjecting aluminum to anodizing treatment in an electrolyte, to thereby obtain an anodized alumina film (anodized film). The anodized film is known to have ordered fine pores (micropores) each having a diameter of about several nanometers to about several hundred nanometers. It is also known that, when a perfectly ordered arrangement is realized by the self-ordering of this anodized layer, hexagonal columnar cells are theoretically formed, each cell having a base in the shape of a regular hexagon centered on a micropore, and that the lines connecting neighboring micropores will form equilateral triangles.

For example, Masuda, H. et al., Jpn. J. Appl. Phys., Vol. 37 (1998), pp. L1340-1342, Part 2, No. 11A, 1 Nov. 1998 (FIG. 2) describes an anodized layer having micropores with a variation in the pore diameter of within 3%. Another related publication ["Hyomen Gijutsu Binran (Handbook of Surface Technology)", edited by The Surface Finishing Society of Japan (The Nikkan Kogyo Shimbun, Ltd., 1998), pp. 490-553] describes natural formation of fine pores in an anodized film in the course of oxidation. Further, Masuda, H., "Highly ordered metal nanohole arrays based on anodized alumina", Solid State Physics, 1996, Vol. 31, No. 5, pp. 493-499 proposes formation of an Au dot array on an Si substrate using a porous oxide film as a mask.

In an anodized layer, a plurality of micropores take on a honeycomb structure in which the pores are formed parallel in a direction substantially vertical to the substrate surface, and at substantially equal intervals. This point is deemed to be the most distinctive characteristic of the anodized layer in terms of material. Another remarkable feature of the anodized layer, thought to be absent in other materials, is that the layer can relatively freely be controlled in pore diameter, pore spacing and pore depth (see Masuda, 1996).

Known examples of applications of anodized layers include various types of devices, such as nanodevices, magnetic devices, and light-emitting devices. For example, JP 2000-31462 A mentions a number of applications, including magnetic devices in which the micropores are filled with the magnetic metal cobalt or nickel, devices in which the micropores are filled with the luminescent material ZnO, and biosensors in which the micropores are filled with an enzyme/antibody.

In addition, in the field of biosensing, JP 2003-268592 A describes an example in which a structure obtained by filling the interior of micropores in an anodized layer with a metal is used as a sample holder for Raman spectroscopy.

Raman scattering refers to the scattering of incident light (photon) caused by inelastic collision of the incident light with a particle, which collision induces change in energy. Raman scattering is used as a technique for spectroscopic analysis, but the scattered light for measurement must have an enhanced intensity for improvement of sensitivity and accuracy of analysis.

A surface-enhanced resonance Raman scattering (SERRS) phenomenon is known as a phenomenon for enhancing Raman scattered light. The phenomenon is such that scattering of light by molecules of certain species adsorbed on a surface of a metal electrode, a sol, a crystal, a deposited film, a semiconductor, or the like is enhanced as compared to scattering in a solution. A significant enhancing effect of $10^{11}$ to $10^{14}$ times may be observed, in particular, on gold for salver. The mechanism causing the SERRS phenomenon is not yet clarified, but surface plasmon resonance presumably has an effect thereon. JP 2003-268592 A also aims at utilizing the principle of plasmon resonance as a means for enhancing the Raman scattering intensity.

Plasmon resonance refers to a phenomenon in which a plasmon wave as an electron density wave localized on the surface of a noble metal such as gold or silver interacts with an electromagnetic wave when the surface is irradiated with light and brought into an excited state (resonance excitation), leading to a resonant state formation. Particularly, surface plasmon resonance (SPR) refers to a phenomenon in which collective vibrations of free electrons on a metal surface occur when the metal surface is irradiated with light and the free electrons are brought into excited states, which leads to a generation of surface plasmon waves bringing about a high electric field.

An electric field is enhanced by several orders ($10^B$ to $10^{10}$ times, for example) in a region in the vicinity of a surface where plasmon resonance takes place, more specifically, in a region within about 200 nm from the surface, and significant enhancement in various optical effects are observed. For example, when light enters a prism having a thin film of gold or the like deposited at an angle equal to or larger than the critical angle, a change in dielectric constant of a surface of the thin film can be detected with high sensitivity as a change in intensity of reflected light due to the surface plasmon resonance phenomenon.

To be specific, use of an SPR apparatus applying the surface plasmon resonance phenomenon allows measurement or kinetic analysis of a reaction amount or bonding amount between biomolecules without labeling and in real time. The SPR apparatus is applied to researches on immune response, signal transduction, or interaction between various substances such as proteins and nucleic acids. Recently, a paper describing analysis of trace amounts of dioxins using an SPR apparatus has also been published (see I. Karube et al., Analytica Chimica Acta, 2001, Vol. 434, No. 2, pp. 223-230).

Various methods for enhancing plasmon resonance have been studied, and a technique of localizing plasmon by forming a metal into isolated particles, not into a thin film is known. For example, JP 2003-268592 A describes a technique of localizing plasmon by providing metal particles in pores of an ordered anodized film.

A research report describes that when localized plasmon resonance caused by metal particles is utilized, the metal particles locating close to one another enhance the electric field intensity at a gap between the metal particles, thereby realizing a state where plasmon resonance occurs more easily (see Takayuki Okamoto, "Researches on interaction of metal nanoparticles and on biosensors", on-line, URL: http://www.plasmon.jp/reports/okamoto.pdf, searched on Nov. 27, 2003).

Production of an anodized layer having regularly arranged micropores by using self-ordering of the anodized layer has generally been accomplished with a self-ordering step in which electrolysis is conducted for a long time under particular electrolytic conditions to promote regular formation of the micropores, and a layer removal step using a mixed aqueous solution of chromic acid and phosphoric acid in which thy anodized layer obtained in the self-ordering step is so dissolved as to expose the bottom part of the most regularly arranged micropores on the surface.

JP 61-88495 A describes subjecting a member of aluminum or its alloy to an anodizing treatment to form a porous layer, and using reverse-electrolytic means to strip the porous layer off the substrate and obtain the porous layer.

In the meanwhile, production of a fine structure having a high aspect ratio by fine patterning such as X ray exposure can be accomplished if a technique involving use of X-ray lithography such as LIGA process is used. The apparatus used in such production, however, is expensive because it requires use of a high quality X ray source (with high wave uniformity and beam straightness) only realized by a large scale accelerator installation such as Spring-8, and, in fact, the production cannot be carried out industrially unless the resulting product has an application which adds a high value to the product.

In contrast, self-ordering anodization is capable of processing a relatively large area at a reduced cost, and therefore, should have a wide variety of practical applications.

As described in Masuda, Hideki et al., Appl. Phys. Lett., 71(19), 10 November 1997 and Masuda, H. et al., J. Electrochem. Soc., Vol. 144, No. 5, May 1997, pp. L127 to L130, an aluminum material having an aluminum purity of 99.99% is generally used in the production of a nanostructure by forming an anodized layer on an aluminum substrate, with the micropores of the anodized layer being regularly arranged. The polishing is generally conducted by electrolytic polishing.

When the nanostructure produced by such self-ordering anodization is used in an article requiring a particularly high surface smoothness such as optical device and magnetic device, S/N ratio has been known to be insufficient due to decrease in the signal intensity.

In view of such situation, use of an aluminum substrate having flat mirror finished surface is highly desirable. Such mirror finished high purity aluminum, however, is not commercially available, and various methods including the most popular electrolytic polishing are used to polish the aluminum surface to mirror finished grade.

However, defects of visually recognizable level such as "blisters" or "rolling streaks" could not be removed by the electrolytic polishing, and accordingly, use of the resulting nanostructure in the application involving an electromagnetic processing such as an optical device or magnetic device was difficult.

The aluminum substrate is produced by repeated melting for purification in a melting furnace, and in the melting furnace, the molten metal is agitated by using a gas such as air or inert gas. As a consequence, the gas is trapped in the metal, and the metal has to be degassed under reduced pressure. In the case of high purity material having an aluminum purity in excess of 99.99%, the metal needs severe agitation for floating of trace amounts of impurities to the surface, and this results in a higher content of bubbles in the resulting metal, and hence, in insufficient degassing.

When such aluminum including bubbles is rolled, raised parts called "blisters" with a diameter of about 50 $\mu$m

to 2 mm and a depth of about 0.1 to 20 $\mu$m are generated on a rolled product. Density of the blisters is generally in the range of several blisters to several hundred blisters per square decimeter.

The aluminum substrate is produced in the form of a sheet by rolling. Rolling is a method in which a slab (ingot) is passed between two parallel rolls to reduce the thickness to a particular level, and this process destroys the cast structure of the slab to realize a uniform structure. Rolling is divided into hot rolling in which the slab is heated before the rolling, and cold rolling in which the slab is rolled at room temperature.

Rolling is usually accomplished by the hot rolling in which thickness of the slab is reduced and the cast structure of the slab is changed into rolled structure of the sheet, and the subsequent cold rolling in which the sheet is finished.

As described above, the aluminum substrate is extended by the rolling process. The process occasionally produces an unevenness called "rolling streak" which extends in the direction of the rolling. This rolling streak is a surface irregularity of a size visually recognizable with naked eye, and is associated with unnecessarily increased $R_a$ in the direction perpendicular to the rolling direction.

US-A-5 747 180, US-A-2003/0109134, US-A-2002/0145826 and US-A-6,139,713 all teach a method of providing structures on highly pure aluminium substrates by subjecting their respective aluminium substrates to electropolishing followed by anodisation.

The relatively large surface irregularities like "blisters" or "rolling streaks" could not be removed by the electrolytic polishing, and when an aluminum substrate with such surface irregularities is used in an article requiring a particularly high surface smoothness like optical device, S/N ratio was insufficient due to decrease in the signal intensity and the like. Accordingly, there is a strong demand for a polishing capable of removing the surface irregularities.

SUMMARY OF THE INVENTION

However, the layer removal step using the mixed aqueous solution of chromic acid and phosphoric acid as described above generally required a long time of several hours to well over ten hours although the time required may vary with the thickness of the anodized layer. In addition, the anodized layer could not be effectively used because of the dissolution.

The anodized layer produced under anodizing conditions described in JP 61-88495 A had an excessively large coefficient of variation in the pore diameter, and could not be used as a sample stage for Raman spectroscopic analysis, or the like. When the thickness of the layer is reduced by the current recovery method described in JP 61-88495 A, the regularly arranged recesses on the surface of the aluminum member were lost and the coefficient of variation in the pore diameter was too large, and the aluminum member could not be used as a sample stage for Raman spectroscopic analysis, or the like.

In view of the situation as described above, an object of the present invention is to provide a method capable of producing a structure having regularly arranged recesses in a reduced time, as well as the structure producible by such a method.

Another object of the present invention is to provide a method capable of producing a nanostructure having micropores (fine pores) made by anodization or anodic formation, which is free from visually recognizable defects such as rolling streaks and blisters and which can be used in electromagnetic device.

Yet another object of the present invention is to provide novel nanostructures and nanodevices, which can be used in a wide variety of applications, by using as a base the nanostructure having micropores that is producible by such a production method as above.

According to a first aspect, the present invention provides a method for producing a nanostructure comprising the steps of:

polishing an aluminum substrate having an aluminum purity of at least 99.9% at least by mechanical polishing to an arithmetical mean roughness $R_a$ of 0.1 $\mu$m or less and a glossiness of at least 60%, and
anodizing on the aluminum substrate to thereby produce a nanostructure provided in its surface with nanopores having an average pore diameter of 8-200 nm.

Preferably the mechanical polishing is electrolytic-abrasive polishing.

Preferably the mechanical polishing is performed using an abrasive such as diamond or alumina.

Preferably the nanopores have an average pore interval of 23-600 nm, more preferably 24-500 nm.

According to a second aspect, the present invention provides a method of manufacturing an electromagnetic device comprising the steps of:

producing a nanostructure by the method as defined in the above first aspect, and
subjecting the nanostructure to a sealing treatment in which the nanopores of the anodized layer are filled with a metal material or magnetic material.

The nanostructure production method according to the present invention is capable of producing a nanostructure comprising an anodized layer, in which a low surface roughness and a high glossiness are attained, and accordingly, an improved S/N ratio is realized when the structure is used for an optical device or a magnetic device.

The nanostructure production method according to the present invention is a method for producing a nanostructure having micropores made by anodization or anodic formation, wherein the anodization is conducted after mirror finishing the surface of a high purity aluminum plate by removing visually recognizable defects generated on the surface, such as "blisters" and rolling streaks, to thereby improve smoothness of the surface of the anodized nanostructure. In consequence, a structure which is ordered over a large area and applicable to an electromagnetic device such as optical device or magnetic device can be obtained in a simple procedure.

## DETAILED DESCRIPTION OF THE INVENTION

The method for producing a nanostructure according to the present invention is a method for producing a nanostructure comprising the steps of performing polishing on an aluminum substrate having an aluminum purity of at least 99.9% at least by mechanical polishing to an arithmetical mean roughness $R_a$ of up to 0.1 $\mu$m and a glossiness of at least 60%, and further performing anodizing on the aluminum substrate to thereby produce a nanostructure provided in its surface with nanopores having an average pore diameter of 8-200 nm.

### <Aluminum substrate>

The aluminum substrate used in the production method of the present invention has an aluminum purity of 99.9% or higher. An aluminum substrate having a higher aluminum purity has an increased regularity after anodization as well as an increased size of the area with regular arrangement (in terms of average pore interval), and therefore, the aluminum substrate preferably has the highest possible aluminum purity when the aluminum substrate is used for an electromagnetic device. In this regard, an aluminum material having an aluminum purity of preferably 99.99% or higher, more preferably 99.995% or higher, and still more preferably 99.999% or higher is known.

A commercially available aluminum sheet having an aluminum purity of 99.9 to 99.99% is generally associated with rolling streaks but mostly with no blisters. However, an aluminum sheet having an aluminum purity in excess of 99.99% is often custom produced by using a small width experimental machine, and therefore, usually associated with different degrees of blisters.

An aluminum having an aluminum purity of 99.99 to 99.999 wt% is generally called a high purity aluminum, and an aluminum having an aluminum purity of 99.999 wt% or higher is called an ultra high purity aluminum.

The aluminum substrate is produced by repeated melting for purification in a melting furnace, and in the melting furnace, the molten metal is agitated by using a gas such as air and inert gas. As a consequence, the gas is trapped in the metal, and the metal has to be degassed under reduced pressure. In the case of high purity material having an aluminum purity in excess of 99.99%, the metal needs severe agitation for floating of trace amounts of impurities to the surface, and this results in a higher content of bubbles in the resulting metal, and hence, in insufficient degassing.

When such aluminum including bubbles is rolled, raised parts called "blisters" with a diameter of about 50 $\mu$m to 2 mm, and in particular, a diameter of about 0.1 to 1 mm, and a depth of about 0.1 to 20 $\mu$m, and in particular, a depth of about 0.3 to 10 $\mu$m are generated on a rolled product. Density of the blisters is generally in the range of several blisters to several hundred blisters per square decimeter. The resulting product is also associated with the rolling streaks.

### <Surface treatment>

The methods used for treating a metal surface are generally classified into mechanical treatments, chemical treatments, and electrochemical treatments. Among these, mechanical treatment refers to a treatment in which a metal surface is mechanically abraded generally by using an abrasive with a high degree of hardness placed between the object to be polished and a polisher and moving the object and the polisher in relation to each other. The resulting metal surface varies with the type and particle size of the abrasive and the polisher used. Chemical treatment refers to the smoothing of oxide film on a metal surface or the metal surface itself with an aqueous acid or alkali solution.

In present invention, a chemical treatment or an electrochemical treatment may be conducted simultaneously with or separately from the mechanical treatment as long as the mechanical treatment is conducted.

The inventors of the present invention found that, among various methods known as for treating a metal surface, at least mechanical polishing is required in order to remove the relatively large surface irregularities such as "blisters" or "rolling streaks".

In addition, in the present invention, the substrate is preferably subjected to auxiliary chemical polishing and electrochemical polishing treatments as will be described later after the mechanical polishing treatment as described below.

<Mechanical polishing>

Mechanical polishing is a method in which the substrate is polished by grinding the substrate with sharp edges of an abrasive. In the mechanical polishing, an abrasive-containing medium such as abrasive slurry (a mixture of water and an abrasive) is embedded in a support such as cloth, paper, or metal, or the abrasive-containing medium is supplied between the substrate as an object to be polished and the support as a polisher for frictional contact of the abrasive with the substrate. This method makes it possible to treat a large area at once at a high grinding performance, and also to remove deep defects. When the substrate is thin, the substrate generally needs to be embedded in a resin or adhered to a metal block to thereby facilitate polishing of the substrate. Particularly when mirror finished, the surface of the substrate is subjected to a polishing called buff polishing using a special polishing cloth and abrasive.

(1) Fine polishing

Fine polishing is preferably conducted by using a polisher such as a polishing paper or cloth produced by applying an abrasive such as SiC, diamond, or alumina onto a water resistant paper or cloth. Exemplary such polishers include a polishing paper produced by embedding SiC powder in a water resistant paper, a fine polisher produced by embedding a diamond powder in a metal, and a fluffed cloth (commonly called "buff") for use in combination with a slurry or paste of an abrasive in water or a chemical. The grit of the abrasive may vary from #80 (particle size, 200 $\mu$m) up to #4000 (particle size, 4 $\mu$m).

The abrasive or the polishing cloth is preferably changed from the one having a lower grit number (larger particle size) to the one having a higher grit number (smaller particle size) step by step. While buffing can be conducted by using a coarse abrasive without fine polishing, fine polishing using a water resistant paper or cloth onto which the abrasive is applied is preferably conducted since the coarse abrasive remaining on the surface may cause scratches. The water resistant paper or cloth is preferably changed with the change of the abrasive.

Various commercial polishers including the following can be used for the fine polishing.

Polishing cloths DP-Net with a particle size of 6 to 45 $\mu$m manufactured by Marumoto Struers
Polishing cloths DP-Nap with a particle size of 0.25 to 1 $\mu$m manufactured by Marumoto Struers
Water resistant polishing papers of a #80 to #1500 grit manufactured by Marumoto Struers

(2) Buff polishing

Buff polishing uses a buff formed from a cotton cloth, sisal cloth, wool fiber, or the like, which is caused to rotate at a high speed. The rotating buff may have an abrasive fixed to its peripheral surface with an adhesive such as glue or, alternatively, held temporarily on its surface. Against the rotating buff as such, an article is pressed to thereby mechanically grind and smooth the surface of the article.

a) Polishing machine

A buff polishing machine is a polishing machine in which a buff is attached at an end of a machine shaft, and caused to hold an abrasive on its peripheral surface. The polishing is conducted by rotating the buff as such at a high speed. While manual polishing is also possible, automatic polishing can be carried out by using the polishing machine in combination with an adequate jig.

Various commercial polishing machines including the following can be used as the buff polishing machine.

LaboPol-5, RotoPol-35, and MAPS manufactured by Marumoto Struers

b) Buff

Exemplary buffs include fabric buffs such as sewn buffs, stitched buffs, loose buffs, bias buffs and sisal buffs, and other buffs such as flap wheels, nonwoven wheels and wire wheels, which are used in adequate applications. The preferred is use of a napped cotton buff.

Various commercial buffs including the following are usable.

Polishing cloths No. 101 (wool), No. 102 (cotton), No. 103 (synthetic fiber), and No. 773 (blend of cotton and synthetic fibers) manufactured by Marumoto Struers

c) Abrasive

Buffing abrasive refers to a homogeneous mixture of a powder abrasive having a relatively small particle size as the main component and a grease or other suitable component constituting a medium.

Various commercial abrasives can be used as the buffing abrasive.

c-1) Grease-based abrasive

Grease-based abrasive refers to an abrasive produced by kneading fine abrasive particles with a grease and solidifying the resulting mixture, and such abrasive is mainly used for mid-stage polishing and finish polishing. The greases commonly used include stearic acid, paraffin, tallow, and rosin.

When the grease-based abrasive is pushed against the buff, the grease melts by the frictional heat, and the abrasive particles move onto the buff surface along with the molten grease. When a metal article is pressed against such buff, the grease forms an oil film on the surface of the metal, and, in consequence, unnecessary biting of the abrasive particles into the metal surface is prevented to facilitate smoothing of the metal surface.

Examples of the grease-based abrasive include emery paste, tripoli, crocus, lime, green rouge, red rouge, white rouge, and grease stick. Among these the preferred are tripoli (main component, $SiO_2$; Mohs hardness, 7), quick lime (main component, CaO; Mohs hardness, 2), green rouge (main component, $Cr_2O_3$; Mohs hardness, 6), and white rouge (main component, $Al_2O_3$; Mohs hardness, 9).

c-2) Liquid abrasive

A liquid abrasive is an abrasive produced for use in an automatic buff polishing machine. Since the abrasive is in liquid form, it can be automatically fed to the polishing machine.

Examples of conventional liquid abrasives include those containing SiC, diamond, and alumina powder. The liquid abrasive is used in the automatic buff polishing machine, for example, by spraying the liquid abrasive from a nozzle of a spray gun and by controlling intermittent opening and closing of the nozzle with a timer.

Particle size of an abrasive is generally indicated by grit number, and an abrasive with a higher grit number has a smaller particle size (see Table 1 below).

Table 1

| Grit | Mean particle size [$\mu$m] |
|---|---|
| #80 | 300 |
| #240 | 80 |
| #400 | 40 |
| #800 | 20 |
| #1000 | 16 |
| #1500 | 10 |
| #2000 | 7.9 |
| #3000 | 5 |
| #4000 | 3.1 to 4.5 |
| #8000 | 1.5 to 2 |

Polishing is generally carried out by starting from the coarsest abrasive, and sequentially changing the abrasive to a finer abrasive. Mirror-like gloss starts to appear on the surface polished with an abrasive having a grit of around #1000, and the surface visually reaches mirror finished state when it is polished with an abrasive having a grit of around #1500 or higher.

Various abrasives having a mean particle size of about 0.1 to 100 $\mu$m are commercially available, including the following abrasives.

Diamond suspensions DP-Spray having a particle size of 0.25 to 45 $\mu$m manufactured by Marumoto Struers
Alumina suspensions No. 100 (particle size, 1 $\mu$m) to No. 2000 (particle size, 0.06 $\mu$m) manufactured by Meller

c-3) Polishing aid

Emery is adhered.to the cloth buff, for example, by a glue, cement, or the like. Glue becomes a viscous liquid when dissolved in a hot water. Cement is sodium silicate blended with a synthetic resin, and adheres the emery to the buff as in the case of glue.

When surface irregularities with large width and depth (several hundred micrometers to several millimeters) are removed by mechanical polishing, the polishing may be conducted by such methods as set forth in Table 2 below. The mechanical polishing is preferably conducted at a peripheral speed of 1800 to 2400 m/min.

Table 2

| Type of polishing tool | Form of polishing tool | Type of abrasive | Grit | Polisher | $R_a$ after polishing [μm] |
|---|---|---|---|---|---|
| Polishing cloth or paper | Sheet | Garnet, alumina, zirconia, SiC | #80 to #10000 | Cloth | 0.1 to 2 |
| Polishing film | Sheet | Alumina, SiC, diamond | #500 to #10000 | PET | 0.1 to 1.5 |
| Flap wheel | Wheel | Alumina, SiC | #500 to #1000 | Cloth | 0.3 to 1.5 |
| Polishing brush | Wheel, roll, etc. | Alumina, SiC | #100 to #3000 | Nylon, aramid | 0.2 to 1.5 |
| PVA grinder | wheel, roll, etc. | Alumina | #3000 to #10000 | Cloth | 0.1 to 0.3 |
| Buff | Wheel, rotating sheet | Alumina | #3000 to #10000 | Fluffed cloth | 0.1 to 0.3 |

Among others, use of a polishing cloth, polishing paper, and buff is preferable in view of availability and versatility.

When the entire polishing is conducted by using buffs, it is preferable that rough polishing (grit of up to #400) is conducted with a sisal cloth or cotton twill, mid-stage polishing (grit of #400 to #1000) with a plain weave cotton or rayon, and finish polishing (grit of #1000 or higher) with a calico, broadcloth, flannel, felt, oxhide or the like. When the abrasive is changed into a new abrasive with different grit number, the cloth should be replaced by a new one and the polished surface be fully cleaned beforehand.

For further detail, see "New Practical Technology for Polishing" published by Ohmsha, Ltd., 1992, 1st edition, pages 55 to 93.

The mechanical polishing as described above may also be conducted by electrolytic-abrasive polishing.

<Electrolytic-abrasive polishing>

Electrolytic-abrasive polishing is a method in which a direct current is applied at a current density of preferably 0.05 to 1 A/cm$^2$, and more preferably in the order of 0.1 A/cm$^2$ to an article while abrasively polishing the article by pressing the article against the polisher at a pressure of about 5 to 20 kPa (50 to 200 g/cm$^2$). When an electrolysis is conducted at such a low current density, in general, metal dissolution hardly occurs due to formation of a thick passivated film on the surface to be processed. However, when the passivated film is fractionally removed by the abrasive particles, metal dissolution is promoted at the exposed area, and the current efficiency rapidly increases to the level of tens to a hundred percent. Since micro-ordered areas rising from the surface are selectively removed by the frictional abrasion with the abrasive particles and the electrolytic dissolution of the metal rapidly increases in such areas while areas not rising from the surface remain substantially intact, surface roughness of the article is rapidly improved.

The abrasive suitably used may be an abrasive commonly used in the art, or colloidal silica or colloidal alumina.

Specifically, high purity colloidal silica PL series such as PL-1 (primary particle size, 15 nm; secondary particle size, 40 nm), PL-3 (primary particles size, 35 nm: secondary particle size, 70 nm) , PL-7 (primary particle size, 70 nm; secondary particle size, 120 nm), and PL - 20 (primary particle size, 220 nm; secondary particle size, 370 nm) manufactured by Fuso Chemical Co., Ltd. and PLANERLITE series manufactured by Fujimi Incorporated may suitably be used.

(1) Oscar-type polishing machine

Use of an Oscar-type polishing machine is preferable when the surface is to be provided with a good flatness in addition to a finely mirror-finished state.

Oscar-type polishing machine is an apparatus which has been used in polishing an optical element and so forth. In the Oscar-type polishing machine, the article moves in relation to the rotation of the surface plate, and a high precision in shape is easily realized due to the reduced difference in the amount of polishing by the location. On the other hand, electrolytic-abrasive polishing is advantageous in the efficiency of improving the surface roughness. Combination of the use of Oscar-type polishing machine with the electrolytic-abrasive polishing enables high quality mirror finishing with high precision.

The electrolytic-abrasive polishing can be accomplished in accordance with the details described in JP 3044377 B1 and JP 3082040 B1.

The method described in detail in "New Practical Technology for Polishing" (published by Ohmsha, Ltd., 1992, 1st edition, pages 55 to 93) can also be used.

In the present invention, an aluminum substrate having an arithmetical mean roughness $R_a$ of up to 0.1 $\mu m$ and a glossiness of 60% or higher can be produced by the mechanical polishing as described above.

(Arithmetical mean roughness $R_a$)

Arithmetical mean roughness $R_a$ of a metal surface is generally determined by selecting a plurality of measurement points in the transverse direction, namely, the direction perpendicular to the direction of rolling; measuring the surface roughness over a standard length in the direction of rolling at the selected measurement points; and calculating the average.

In the present invention, it is preferable that the measurement of the arithmetical mean roughness $R_a$ is conducted by cross section curve method in which the surface profile indicated in the cross section perpendicular to the measured surface is determined, namely, by using a contact-probe profilometer when $R_a$ is 1 $\mu$m or higher and using an atomic force microscope (AFM) when $R_a$ is less than 1 $\mu$m to obtain the cross section curve.

In JIS-B601-1994, roughness is evaluated from part of the roughness curve which is sampled by an evaluation length defined on the basis of the standard length L, that is to say, constituted of several (five, for instance) sequential standard lengths. The standard length is to be the same as the cut off value. Various parameters of roughness are determined within each standard length, and the averages in individual parameters are calculated for all standard lengths as the measurements.

In the present invention, the arithmetical mean roughness $R_a$ is the average of the measurements which are obtained in the rolling direction and the direction perpendicular to the rolling direction.

(Glossiness)

In JIS Z 8741, a glass surface having a refractive index of 1.567 (specular reflectance of 10% at an angle of incidence of 60 degrees) over the entire visible region of wavelength is defined to have a glossiness of 100(%). However, a glass surface having such refractive index of 1.567 is easily affected by moisture and the like, and the reference surface actually used is a surface having a refractive index of about 1.500 (glossiness of 90%) (the absolute value is corrected in each measurement by using the reference plate having a glossiness of 90% as 90% reference).

Glossiness is generally measured at a smaller angle for the article having a higher glossiness and at a larger angle for the article having a lower glossiness. In JIS standards, use of angles of 20 degrees, 45 degrees, 60 degrees, 75 degrees, and 85 degrees are defined. However, a popular glossmeter is of a type using an angle of 60 degrees since it has a wide measuring range. Such use of single glossmeter is possible because the glossiness measured varies with the measurement angle in a proportional manner, and the glossiness at other angles can be estimated from the glossiness measured at one particular angle without measuring at every angle. According to JIS standards, glossiness can be indicated in terms of percentage, or solely by showing the figure with no "%".

Glossiness is also called "specular reflectance" and the glossiness is measured at several points in the longitudinal direction parallel to the direction of rolling, and also, at several points in the transverse direction perpendicular to the direction of rolling, and the average is calculated. The glossiness of the aluminum substrate obtained in the method of the present invention is at least 60%, and preferably at least 80% for both longitudinal direction and transverse direction.

The arithmetical mean roughness and the glossiness of the present invention are determined by obtaining the average for the longitudinal direction and the transverse direction in an area of preferably 50 mm$^2$ or more, more preferably 400 mm$^2$ or more, and most preferably 900 mm$^2$ or more.

The surface of an aluminum substrate having an arithmetical mean roughness $R_a$ of 0.1 $\mu$m or less and a glossiness of 60% or more can be regarded as a substantially mirror finished surface with no visually recognizable defects.

<Chemical polishing and electrochemical polishing>

In the production method according to the present invention, auxiliary chemical polishing and electrochemical polishing are preferably conducted after the mechanical polishing. In the present invention, an auxiliary polishing refers to a polishing wherein the decrease in $R_a$ is up to 50% of the decrease in $R_a$ in the mechanical polishing.

(1) Chemical polishing

Chemical polishing is a method in which surface of the aluminum substrate is dissolved by immersing the aluminum substrate in an alkaline aqueous solution or an acidic aqueous solution. As for the alkaline aqueous solution, it is preferable to use chiefly an aqueous solution of sodium carbonate, sodium silicate, sodium phosphate, or a mixture thereof. An aqueous solution of sulfuric acid, nitric acid, phosphoric acid, butyric acid, or a mixture thereof is used as the acidic aqueous solution.

Examples of the chemical polishing carried out as an auxiliary polishing are as shown in Table 3 below.

Table 3

| Type of aqueous solution (wt%) | Temperature | pH | Time |
|---|---|---|---|
| 0.5 to 2% Sodium carbonate 0.05 to 0.2% Silicate | Room temperature to 50°C | 9 to 12 | 10 sec to 30 min |
| 0.5 to 4 % Sodium metasilicate | Room temperature to 70°C | 9 to 12 | 10 sec to 30 min |
| 0. 6 to 1.8% Sodium carbonate 0.6% Sodium orthosilicate | 50 to 70°C | 9 to 12 | 10 sec to 30 min |
| 0.1 to 0.5% Sodium carbonate 0.6 to 1.2% Sodium silicate | 50 to 70°C | 9 to 12 | 10 sec to 30 min |

By adequately adjusting the composition of the aqueous solution as described above, the aluminum substrate can be gradually dissolved to reduce $R_a$. Preferred aqueous acid solutions are exemplified by those as shown in Table 4 below.

Table 4

| Type of aqueous solution (wt%) | Temperature | pH | Time |
|---|---|---|---|
| 3 to 5% Sulfuric acid | Room temperature | 0.3 to 1 | 1 to 5 min |
| 1 to 3% Nitric acid | Room temperature | 0.6 to 2 | 1 to 5 min |
| 4% Chromic acid 21% Sulfuric acid | 60°C | -1 | 1 to 5 min |
| 5% Hydrofluoric acid 2.5% Nitric acid | Room temperature | 0 | 30 sec to 3 min |

Also preferred its a mixed aqueous solution of sulfuric acid, nitric acid, phosphoric acid, and butyric acid having a formulation as described in "Surface Treatment of Aluminum" (published by Uchida Rokakuho Publishing Co., Ltd., 1980, 8th edition, page 36, Table 3). Another preferable solution is a mixed solution of concentrated phosphoric acid and fuming nitric acid having copper nitrate added thereto which is used in Alupol method as described in Met. Ind., 78 (1951), 89.

Various methods described in "Handbook of Aluminum Technology" (edited by Japan Light Metal Association and published by Kallos Publishing Co., Ltd., 1996), Table 5.2.15 are also usable. Among these, the preferred is the method using phosphoric acid-nitric acid.

(2) Electrochemical polishing

Electrochemical polishing is a method in which the aluminum substrate is immersed in an electrolyte solution and an electric power of mainly DC is applied to remove the surface irregularities of the aluminum surface by dissolution. Examples of preferable electrolyte solution include acidic aqueous solutions of hydrogen peroxide, glacial butyric acid, phosphoric acid, sulfuric acid, nitric acid, chromic acid, and sodium dichromate, and mixtures thereof. Additives such as ethylene glycol monoethyl ether, ethylene glycol monobutyl ether, and glycerin may also be used. Use of such additives has the effects of stabilizing the electrolyte solution, and maintaining the electrolyte solution in adequate condition for the electrolysis against change in concentration, change with time, and deterioration by the use.

(3) Electrolytic polishing

Exemplary conditions for the electrolytic polishing conducted as an auxiliary polishing are as set forth in Table 5 below.

Table 5

| Electrolyte solution | Temp. | Time [min] | Waveform | Voltage [V] | Electric current [A/dm$^2$] |
|---|---|---|---|---|---|
| 15 to 25% Aqueous solution of perchloric acid (specific gravity, 1.48) 70 to 80% Glacial butylic acid | up to 50°C | 10 to 20 | DC | 50 to 100 | 3 to 5 |
| 40 to 60 vol% Phosphoric acid 5 to 30 vol% Sulfuric acid 15 to 20 vol% Water 0 to 35 vol% Ethylene glycol monoethyl ether | 40 to 70°C | 3 to 10 | DC | 10 to 30 | 3 to 60 |

Also preferred are the polishing conditions described in "Surface Treatment of Aluminum" (published by Uchida Rokakuho Publishing Co., Ltd., 1980, 8th edition, page 47, Table 6). In addition, various methods described in "Handbook of Aluminum Technology" (edited by Japan Light Metal Association and published by Kallos Publishing Co., Ltd., 1996), Table 5.2.17 are usable.

In view of availability and safety of the solution used, the preferred is the method of Battelle (British Patent No. 526854 (1940) and British Patent No. 552638 (1943)) or the method using phosphoric acid bath (JP 128891 B (application for patent being filed in 1935; JP S13-004757 B).

<Finish polishing>

In the production method according to aspect (II) of the present invention, the aluminum substrate is preferably further polished by additionally using a chemical mechanical polishing (CMP) method or barrier layer removing method after the mechanical polishing and the auxiliary polishing by the chemical polishing and/or the electrolytic polishing.

(1) CMP method

CMP method is a combination of mechanical polishing and chemical polishing which is mainly used in semiconductor processing. Aluminum substrate can be polished by the CMP method as long as it has been fully polished to the level of flat mirror surface. In this regard, use of an alumina or silica slurry is popular for a metal such as aluminum, and colloidal alumina or colloidal silica can be used. Examples include high purity colloidal silica PL series manufactured by Fuso Chemical Co., Ltd. and PLANERLITE series manufactured by Fujimi Incorporated.

In the CMP method, adequate amounts of $H_2O_2$, $F(NO_3)_2$, and $KIO_3$ are added as additives. These additives are preferably used to prepare an acidic slurry which is generally adjusted to a pH of about 2 to 4 since the metal surface should be polished simultaneously with oxidation of the surface in order to prevent scratching and embedding of the abrasive therein. The abrasive preferably has a primary particle size of 5 nm to 2 $\mu$m, and a concentration in the slurry of 2 to 10 vol%. The CMP pad used is preferably a soft pad to prevent scratching. Exemplary pads include CMP pads XHGM-1158 and XHGM-1167 manufactured by Rodel Nitta.

CMP can be accomplished by the method described in "Introduction to Semiconductor Manufacturing Equipment" by Kazuo Maeda published on March, 1999 from Kogyo Chosakai Publishing Co., Ltd. (page 171, FIG. 5.44, Elementals of CMP and equipment used in CMP; and page 172, FIG. 5.45, Constitution of CMP equipment).

The CMP method makes it possible to conduct a high precision polishing. The method, however, requires an expensive installation and complicated steps of selecting the abrasive and additives and setting the polishing conditions. Accordingly, a barrier layer removing method may be used for the finish polishing.

(2) Barrier layer removing method

After the chemical polishing and electrolytic polishing, the substrate is preferably further smoothed by a barrier layer removing method in which a barrier-type anodized layer free from micropores is formed and then removed.

A barrier layer is known to be formed by an electrolysis in an electrolyte solution having a pH of about 4 to 8 near the neutral value. The thus formed anodized layer is uniform and free from micropores.

Exemplary known electrolytic conditions include those set forth in Table 6 below.

Examples of preferable electrolyte solutions include aqueous solutions of a neutral salt such as borate, adipate, phosphate, citrate, tartrate, or oxalate, and mixtures thereof, for example, a mixed aqueous solution of boric acid and sodium borate, or ammonium tartrate. It is also possible to use a neutral aqueous solution obtained by adjusting citric acid, maleic acid, glycolic acid or the like in pH with an alkali such as NaOH.

The electrolysis is preferably conducted at a voltage of 10 to 800 V, and more preferably at 30 to 500 V.

The electrolyte solution preferably has a pH of 4 to 8, and more preferably a pH of 5 to 7.

The electrolysis is preferably terminated before saturation of the voltage in constant current electrolysis, or before substantial stopping of the current flow in constant voltage electrolysis. To be more specific, the electrolysis is preferably conducted for 1 to 30 minutes, and more preferably conducted for 1 to 12 minutes.

The anodized layer preferably has a thickness of 0.1 to 1 $\mu$m, and more preferably a thickness of 0.2 to 0.6 $\mu$m. The thickness of the layer is known to increase in proportion to the final electrolytic voltage.

Table 6

| Electrolyte solution | Temp. | Time [sec] | Waveform | Voltage [V] | Electric current [A/dm$^2$] |
|---|---|---|---|---|---|
| 0.5 mol/L Boric acid | 20 to 90°C | 300 to 1200 | DC | 0 to 1200 | 25 |
| 0.5 mol/L Boric acid 0.0005 to 0.05 mol/L Sodium borate | 20 to 90°C | 300 to 1200 | DC | 0 to 1200 | 25 |
| 2 mol/L Boric acid 0.005 mol/L Ammonium pentaborate | 20 to 90°C | 300 to 1200 | DC | 0 to 1200 | 25 |
| 150 g/L Ammonium adipate | 20 to 90°C | 300 to 1200 | DC | 0 to 110 | 25 |
| 1.4 g/L Ammonium dihydrogen phosphate | 20 to 90°C | 300 to 1200 | DC | 0 to 110 | 25 |

Table 7

| Electrolyte solution | Concentration | pH | Temp. | Voltage | Layer thickness | Preferable electrolysis time |
|---|---|---|---|---|---|---|
| Ammonium tartrate | 0.27 mol/L | 6.7 | 33°C | 100 V | 0.15 $\mu$m | 1.5 to 10 min |
| Ammonium tartrate | 0.27 mol/L | 6.7 | 33°C | 200 V | 0.3 $\mu$m | 3 to 20 min |
| Ammonium tartrate | 0.1 mol/L | 6.7 | 33°C | 300 V | 0.4 $\mu$m | 4 to 30 min |
| Ammonium tartrate | 0.1 mol/L | 6.7 | 33°C | 400 V | 0.5 $\mu$m | 5 to 40 min |
| Ammonium tartrate | 0.1 mol/L | 6.7 | 33°C | 500 V | 0.6 $\mu$m | 6 to 60 min |
| Boric acid - sodium borate | 0.5 mol/L -. 0.05 mol/L | 4.5 | 20°C | 100 V | 0.1 $\mu$m | 1.5 to 10 min |

Removal of the barrier layer is generally conducted by using a mixture of acidic aqueous solutions such as aqueous solutions of phosphoric acid, chromic acid, nitric acid, and sulfuric acid, and the preferred are the aqueous solution used in the chemical polishing and aqueous chromic acid - phosphoric acid solution.

The barrier layer formed is generally known to be thicker in the raised part and thinner in the recessed part, and therefore, the boundary between the aluminum and the anodized layer is led to be flat. Accordingly, a smooth surface is realized after removing the barrier layer.

Method described in "New Theories on Anodized Aluminum" published by Kallos Publishing Co., Ltd., 1997, page 16 may be used for the details.

When the barrier layer formed under the conditions as described above is dissolved to remove by using an aqueous chromic acid - phosphoric acid solution or performing chemical polishing, the mirror finished state of the surface is further improved.

<Barrier layer removal with aqueous chromic acid - phosphoric acid solution>

The removal of the barrier layer is preferably conducted by using an aqueous solution of phosphoric acid and chromic acid.

More specifically, a mixture of phosphoric acid, anhydrous chromic acid, and water is preferably used in the formulation as shown in Table 8 below.

Table 8

| 85% Phosphoric acid | Anhydrous chromic acid | Water | Temp. | Typical immersion time |
|---|---|---|---|---|
| 100 to 140 g | 20 to 40 g | 1500 g | 50°C | 0.1 um/min |

The removal of the barrier layer may also be carried out by the method described in "Abstract of 108th Lecture Meeting" (18-B2, pages 76 to 77) published by The Surface Finishing Society of Japan.

The arithmetical mean roughness which is obtained from the values found in the directions parallel and perpendicular to the rolling direction is as set forth in Table 9 below after the polishing processes as above. (The roughness is commonly referred to as "centerline average roughness $R_a$").

Table 9

| Polishing process | $R_a$ [μm] |
|---|---|
| Mechanical polishing | 0.1 to 10 |
| Chemical polishing | 0.2 to 0.5 |
| Electrolytic polishing | 0.1 to 0.5 |
| Electrolytic-abrasive polishing | 0.01 to 0.5 |
| CMP method | < 0.05 |
| Barrier layer removing method | < 0.05 |

<Other surface treatments>

In the production method of the present invention, the aluminum substrate which has been subjected to the mechanical polishing or the auxiliary chemical polishing and/or electrolytic polishing is subjected to anodizing treatment.

<Recess Formation>

A method of subjecting an aluminum surface of a member to anodizing treatment preferably includes a process of forming recesses serving as starting points for micropore formation before an anodizing treatment for forming micropores (this treatment being hereinafter also referred to as "main anodizing treatment"). Such formation of recesses facilitates control of the arrangement of micropores and variation in pore diameter within a desired range as will be described later.

The method used for forming the recesses is not particularly limited. Examples thereof include a self-ordering method utilizing self-ordering property of an anodized layer, a physical method, a particle beam method, a block copolymer method, and a resist interference exposure method.

(1) Self-ordering method

The self-ordering method involves using high purity aluminum; forming an anodized layer on the aluminum at a low speed and at a voltage adequate for the type of electrolyte solution used over a long period of time (of several hours to well over ten hours, for example); and subjecting the aluminum to layer removal treatment.

In this method, the pore diameter depends on the voltage, and thus a desired pore diameter can be obtained to some extent by controlling the voltage.

In each of the methods described in the documents as referred to before (Masuda, H. et al., Jpn. J. Appl. Phys., Vol. 37 (1998), pp. L1340-1342, Part 2, No. 11A, 1 November 1998 (Fig. 2); Masuda, H. et al., J. Electrochem. Soc., Vol. 144, No. 5, p. L128 (May 1997); Masuda, H. et al., Jpn. J. Appl. Phys., Vol. 35, Part 2, No. 1B, p. L126 (1996); and Masuda, H. et al., Appl. Phys. Lett., Vol. 71, No. 19, p. 2771 (Nov. 10, 1997)), the layer removal treatment for removing the anodized layer through dissolution is performed by using a mixed aqueous solution of chromic acid and phosphoric acid at about 50°C and takes 12 or more hours. Treatment using the boiled aqueous solution destroys and disturbs the starting points for ordering, and therefore, the mixed aqueous solution is used without boiling.

The self-ordered anodized layer has higher ordering property in a portion closer to the aluminum member. The layer is removed once and a base portion of the anodized layer remaining on the aluminum surface is exposed to thereby obtain recesses which are regularly arranged. Accordingly, in the layer removal treatment, the aluminum is not dissolved, and only the anodized layer composed of aluminum oxide is dissolved.

As a result, in each of the methods described in the documents, variation (coefficient of variation) in pore diameter is 3% or less, although the magnitude of micropores is different in each case.

The self-ordering anodizing treatment used in the present invention may be carried out, for example, by a method that involves application of an electric current through the aluminum substrate as the anode in a solution having an acid concentration of 1 to 10 wt%. Solutions that may be used in the anodizing treatment include any one or a combination of any two or more of sulfuric acid, phosphoric acid, chromic acid, oxalic acid, sulfamic acid, benzenesulfonic acid, and amidosulfonic acid.

The conditions for the self-ordering anodizing treatment cannot be determined unconditionally because the conditions vary in accordance with an electrolyte solution used. However, appropriate conditions generally include a concentration of the electrolyte solution of 1 to 10 wt%; a solution temperature of 0 to 20°C; a current density of 0.1 to 10 A/dm$^2$; a voltage of 10 to 200 V; and an electrolysis time of 2 to 20 hours.

Preferably, the self-ordered anodized layer has a thickness of 10 to 50 $\mu$m.

In the present invention, the self-ordering anodizing treatment is carried out for a period of preferably 1 to 16 hours, more preferably 2 to 12 hours, and even more preferably 2 to 7 hours.

The layer removal treatment is carried out for a period of preferably 0.5 to 10 hours, more preferably 2 to 10 hours, and even more preferably 4 to 10 hours.

The self-ordering anodizing treatment and the layer removal treatment are each conducted for a shorter period of time than those conducted in the known methods. In consequence, the regularity of the micropore arrangement deteriorates slightly and the variation in pore diameter increases relatively to a coefficient of variation within a range of 5 to 50%.

When the anodized layer is formed and then dissolved for its removal through a self-ordering method as described above, and the main anodizing treatment described later is conducted under the same conditions, substantially straight micropores are formed substantially perpendicularly to the surface of the layer.

(2) Physical Method

An example of the physical method is a method employing press patterning. A specific example is a method in which a substrate having on the surface a plurality of protrusions is pressed against the aluminum surface to form recesses therein. For instance, the method described in JP 10-121292 A can be used.

Another example is a method in which polystyrene spheres are densely arranged on the aluminum surface, SiO$_2$ is vapor-deposited onto the spheres and the aluminum surface, then the polystyrene spheres are removed and the substrate is etched using the vapor-deposited SiO$_2$ as the mask, thereby forming recesses.

(3). Particle beam method

The particle beam method is a method in which recesses are formed by irradiating the aluminum surface with a particle beam. This method has the advantage in that the positions of the recesses can be freely controlled.

Examples of the particle beam include a charged particle beam, a focused ion beam (FIB), and an electron beam.

The particle beam method can disturb the regularity of the positions of the recesses by using random numbers for determination of the positions of the recesses. Accordingly, regularity of the arrangement of micropores formed by the subsequent main anodizing treatment is disturbed, to thereby readily realize desired variation in the pore diameter.

The positions of the recesses can be set as desired by using the following equation.

$$\text{(Coordinates of desired position)} = \text{(Coordinates of perfectly ordered position)} \pm \text{(Coordinates of perfectly ordered position)} \times \text{(Coefficient of variation)} \times \text{(Random number)}$$

When sealing treatment is conducted by an electrodeposition method, the coefficient of variation in pore diameter is preferably 0.05 to 0.5, more preferably 0.07 to 0.3, and even more preferably 0.1 to 0.2.

When the sealing treatment is conducted by a method using metal colloidal particles, the coefficient of variation in pore diameter is determined in accordance with the particle size distribution of the metal colloidal particles used.

An example of the particle beam method that can be used is the method described in JP 2001-105400 A.

(4) Block copolymer method

The block copolymer method is a method involving formation of a block copolymer layer on the aluminum surface, formation of a sea-island structure in the block copolymer layer by thermal annealing, and removal of the island portions to form recesses.

An example of the block copolymer method that can be used is the method described in JP 2003-129288 A.

(5) Resist interference exposure method

The resist interference exposure method is a method involving provision of a resist on an aluminum surface, as well as exposure and development of the resist so as to form therein recesses penetrating to the aluminum surface.

An example of the resist interference exposure method that can be used is the method described in JP 2000-315785 A.

Of the various methods of forming recesses as described above, the self-ordering method, FIB method, and resist interference exposure method are desirable because they make it possible to uniformly form recesses over a large surface area of about 10 cm square or more.

From the standpoint of production costs, the self-ordering method is especially preferred. The FIB method is also preferable because it enables the arrangement of micropores to be controlled at will.

The recesses formed have a depth of preferably at least about 10 nm and a width which is preferably not greater than the desired pore diameter.

<Main anodizing treatment>

An anodized layer is formed on the aluminum surface by the main anodizing treatment preferably after recesses are formed in the aluminum surface as described above.

The main anodizing treatment may be carried out by any method known in the art, although use of the conditions identical to those employed for the self ordering method is preferred. The electrolysis voltage is preferably 10 to 240 V, and more preferably 10 to 60 V.

It is also preferable that the main anodizing treatment is conducted by repeating on-off control of electric current while keeping a DC voltage constant or, alternatively, while intermittently changing a DC voltage. With such a method being used, fine micropores are formed on the anodized layer and uniformity is improved particularly upon sealing treatment through electrodeposition.

In the method involving intermittent change of the voltage as above, the voltage is preferably reduced sequentially. In this way, the resistance of the anodized layer can be reduced, and the uniformity is achieved in the subsequent electrodeposition.

Once optimal conditions are substantially determined, the electrolysis may be conducted at a constant voltage, and when 0.3 M solution of sulfuric acid is used for the electrolyte solution, the electrolysis is preferably conducted at a constant voltage of 25 V, and when 0.5 M solution of oxalic acid is used for the electrolyte solution, the electrolysis is preferably conducted at a constant voltage of 40 V. When the electrolysis voltage is higher than the preferred voltage by about 1 V or more, the electric current will be concentrated on some parts of aluminum surface (phenomenon so called "burning"), rendering uniform electrolysis impossible. When the electrolysis voltage is lower than the preferred voltage by about 1 V or more, regularity will lack in some parts of the aluminum surface. Accordingly, it is preferable that the electrolysis voltage is higher than 24 V but lower than 26 V in the former case as above, and higher than 39 V but lower than 41 V in the latter.

When the main anodizing treatment is carried out at a low temperature, micropores are regularly arranged and the pore diameter is uniform.

In the present invention, the main anodizing treatment may be carried out at a relatively high temperature to disturb the micropore arrangement and facilitate control of the variation in pore diameter to a specified range. The variation in pore diameter can also be controlled by adjusting the treatment time.

The anodized layer preferably has a thickness of 0.5 to 10 times, more preferably 1 to 8 times, and most preferably 1 to 5 times the pore diameter to facilitate the sealing.

The average pore diameter is preferably 10 nm or more if electrodeposition treatment is conducted later as the sealing treatment.

Accordingly, a preferable example of the anodized layer has a thickness of 0.1 to 1 $\mu$m and an average pore diameter of micropores of 0.008 to 0.2 $\mu$m (8 to 200 nm). The average pore diameter is preferably 8 to 200 nm, more preferably 8 to 100 nm, and still more preferably 8 to 65 nm.

The anodized layer has an average pore interval of preferably 23 to 600 nm, more preferably 24 to 500 nm, and still more preferably 63 to 500 nm.

The anodized layer has an average pore density of preferably 50 to 1,500 pores/$\mu$m$^2$, more preferably 5 to 800 pores/$\mu$m$^2$, and most preferably 200 to 800 pores/$\mu$m$^2$.

The micropores preferably account for an area ratio of 20 to 50%. The area ratio accounted for by the micropores is the ratio of the total area of openings of micropores to the area of the aluminum surface. Upon calculation of the area ratio accounted for by the micropores, the micropores used in the calculation include both the micropores that have been sealed with a metal and the non-sealed micropores. To be specific, the area ratio accounted for by the micropores is determined by measuring a surface porosity before the sealing treatment.

In an embodiment of the production method according to aspect (II) of the present invention, the aluminum substrate subjected to the mechanical polishing or the auxiliary chemical polishing and/or electrolytic polishing is subjected to the main anodizing treatment under the following exemplary conditions.

1) Anodizing treatment is conducted by using aqueous solution of sulfuric acid at a temperature in the range of 12 to 17°C and a concentration in the range of 0.1 to 0.2 mol/L for the electrolyte solution, and at a voltage in the range of 23 to 26 V for a treatment time in the range of 0.5 to 12 hours to form micropores having an average pore diameter of 28 to 36 nm and an average pore interval of 40 to 80 nm.

2) Anodizing treatment is conducted by using aqueous solution of oxalic acid at a temperature in the range of 12 to 17°C and a concentration in the range of 0.4 to 0.6 mol/L for the electrolyte solution, and at a voltage in the range of 38 to 42 V for a treatment time in the range of 0.5 to 7 hours to form micropores having an average pore diameter of 20 to 45 nm and an average pore interval of 80 to 120 nm.

3) Anodizing treatment is conducted by using an acidic aqueous solution at a temperature in the range of 0 to 25°C and a concentration in the range of 0.01 to 2 mol/L for the electrolyte solution, and at a voltage in the range of 23 to 400 V for a treatment time in the range of 0.5 to 12 hours.

<Evaluation of micropores>

Average pore diameter and average pore interval of the micropores were measured by image analysis of the SEM photograph of the aluminum surface.

(Measurement of average pore diameter and average pore interval)

Distance between the centers of adjacent pores was measured at 30 points in the SEM photograph (gradient, 0 degrees) taken with a field emission type scanning electron microscope (FE-SEM) under a 1x to 150,000x magnification adjusted depending on the pore diameter, and the average of 30 measurement values was found as the average pore interval.

Such measurement is conducted under an adequate magnification allowing preferably 60 to 250 pores, and more preferably 80 to 200 pores to be seen in one coverage.

Average pore diameter was determined by tracing contours of about 100 pores on a transparent OHP sheet, and using an image analysis package (Image Factory (product name) manufactured by Asahi HiTech Co., Ltd.) to perform approximation to an equivalent circle diameter so as to regard the found value as the average pore diameter. The image analysis package is not limited to the one as mentioned above, and any package having equivalent functions may be used. However, in order to strictly exclude arbitrariness associated with the setting of the threshold during the binarization, the image analysis is preferably conducted for the shape that has been traced onto a transparent sheet such as OHP sheet.

<Pore widening treatment>

The pore widening treatment is a treatment wherein the aluminum member after the main anodizing treatment is immersed in an aqueous acid solution or aqueous alkali solution to dissolve the anodized layer and increase pore diameter of the micropores.

Such treatment facilitates control of the regularity in the arrangement of the micropores and variation in the pore diameter of the micropores. Dissolution of the barrier layer at the bottom of the micropores in the anodized layer enables selective electrodeposition in the interior of the micropores and slight increase in the variation in the pore diameter.

<Other treatments>

Other treatments may also be conducted as required.

<Production of structures by using a structure as a mold>

The nanostructure produced by the production method of the present invention may be used as a mold for producing further nanostructures.

The structure according to the present invention is used as a mold. The structure as a mold is pressed against an aluminum surface at a pressure of approximately 2.5 t/cm$^2$ to form regularly arranged recesses therein, and the resulting aluminum surface is used as such or subjected to anodizing treatment so as to produce a nanostructure.

The aluminum surface is not particularly limited. However, preferred is an aluminum surface prepared by using the aluminum substrate with an aluminum purity of 99.9% or higher used in the production method according to aspect (II) of the present invention, and at least mechanically polishing its surface to reduce the arithmetical mean roughness $R_a$ to 0.1 $\mu$m or lower and the glossiness to 60% or higher.

<Sealing treatment>

The structure according to the present invention may be made into an electromagnetic device by a sealing treatment in which the micropores of the anodized layer are filled with a metal material, a magnetic material, or the like.

The metals which may be used in the sealing treatment include iron, nickel, cobalt, as well as alloys and oxides thereof.

The method used in the sealing treatment is not particularly limited, and a method known in the art may be used . The sealing treatment is described in the following by referring to the treatment using a metal material.

Exemplary preferable methods include electrodeposition and the method wherein a dispersion of metal colloidal particles is applied to an aluminum member having the anodized layer, and then caused to dry. The metal is preferably in the form of metal particles or aggregates of such metal particles.

When the sealing treatment is conducted by electrodeposition, the metal particles are deposited at varying distance due to the variation in the pore diameter. As a consequence, it is relatively easy to realize the situation in which some of the metal particles are located in close proximity with each other. As long as some metal particles are located in close proximity with each other, surface-enhanced resonance Raman scattering can be utilized even if other particles were located remote from each other or in contact with each other.

In contrast, when the conventional anodized layer having micropores of uniform pore diameter is subjected to a sealing treatment by electrodeposition, the resulting metal particles are located at a uniform interval, and it is difficult to adjust such interval to the range appropriate for the surface-enhanced resonance Raman scattering. When the particle interval is out of an appropriate range, all particles are located either remote from each other or in contact with each other, and use of the surface-enhanced resonance Raman scattering is not available.

After application of the dispersion, the surface is cleaned with a solvent such as water as appropriate. As a result, only particles filled into the micropores remain at the anodized layer, with the particles not filled into the micropores being removed.

The amount of metal remaining attached after the sealing treatment is preferably in the range of 100 to 500 mg/m$^2$.

The surface after the sealing treatment preferably has a surface porosity of 20% or less. The surface porosity after the sealing treatment refers to the ratio of the total area of the openings of unsealed micropores to the area of the aluminum surface, and the surface porosity within the above specified range provides further enhanced localized plasmon resonance.

The metal colloidal particles used in the dispersion usually have a variation in the particle size distribution of approximately 10 to 20% in terms of coefficient of variation. In the present invention, colloidal particles having a variation in the particle size distribution can be efficiently used in the sealing treatment by adequately limiting the pore diameter variation to a particular range.

At a pore diameter of 50 nm or more, the use of metal colloidal particles is preferred. At a pore diameter of less than 50 nm, the use of an electrodeposition process is preferred. Suitable use can also be made of a combination of both.

<Electromagnetic device>

The electromagnetic device of the present invention produced as described above has its micropores filled with a metal material or a magnetic material, and such metal or magnetic material is present in the form of particles on the surface of the anodized layer.

In general, the distance between the particles of metal and so forth is preferably small for increasing a Raman enhancing effect, but the optimal distance depends on the size and shape of the particles. Further, depending on the molecular weight of the substance or the viscosity of the liquid used as a sample for Raman spectroscopic analysis, a problem may be caused in that the substance or the liquid does not sufficiently penetrate through the gap between the particles.

<Raman enhancing effect by localized plasmon resonance>

The structure of the present invention that has metal particles filled into its micropores can generate localized plasmon resonance which has an intensity larger than the conventional structures, and use of such structure in the Raman spectroscopic analysis facilitates further increased Raman enhancing effect. Accordingly, the sample holder for Raman spectroscopic analysis produced by using the structure of the present invention is quite useful.

The usage of the sample holder for Raman spectroscopic analysis of the present invention is the same as that of a conventional sample holder for Raman spectroscopic analysis. To be specific, properties of a substance in the vicinity of the metal attached to the sample holder are detected by irradiating the sample holder for Raman spectroscopic analysis of the present invention with a light beam, and measuring the Raman scattering intensity of the reflected light or transmitted light.

The nanostructure according to the present invention can be used by itself as a functional material, and also, as a matrix or mold for a new nanostructure, for example, by filling the micropores in the nanostructure of the present invention with a metal, a semiconductor, or other functional material to develop a new electronic device.

The nanostructure according to the present invention may also be used in a remarkably extended variety of applications such as quantum wire, molecule sensor, coloring, solar cell, gas sensor, and precision filter; as well as such electoromagnetic devices as magnetic recording medium, optical devices including light emitting EL device, electrochromic device and photonic band, and electron releasing device.

EXAMPLES

Next, the present invention is described in further detail by referring to Examples corresponding to the present invention. However, the present invention is not limited to such Examples.

1. Polishing of the aluminum substrate

The aluminum plate used was a custom made 5N aluminum plate manufactured by Nippon Light Metal Co., Ltd. having a size of 5 cm x 5 cm. The results of the analysis are shown in Table 14 in wt%. The aluminum plate was polished by the mechanical polishing, the chemical polishing, the electrolytic polishing, the CMP method, and the barrier layer removing method as described below. Table 16 shows the procedure used for the polishing, together with blister density, $R_a$, and average glossiness measured for the resulting aluminum surface. "-" means that the relevant treatment was not conducted.

Table 14

| Element | Fe | Si | Cu | Al |
|---|---|---|---|---|
| Content | less than 0.0002% | less than 0.0002% | less than 0.0002% | 99.999% or higher |
| A1) Mechanical polishing | | | | |

A sample (5 cm x 5 cm) was adhered to a mirror finished metal block with a double sided adhesive tape (removable tape 9455 manufactured by Sumitomo 3M Limited). The sample was polished until no surface irregularities were detected by visual inspection by using a polishing machine (LaboPol-5 manufactured by Marumoto Struers) and polishing papers (water-resistant polishing papers manufactured by Marumoto Struers) with grit numbers #80, #240, #500, #1000, #1200 and #1500, and changing the polishing papers in order of grit number, from the lowest toward a higher.

A2) Mechanical polishing

A sample (5 cm x 5 cm) was adhered to a mirror finished metal block with a double sided adhesive tape (removable tape 9455 manufactured by Sumitomo 3M Limited). The sample was polished until no surface irregularities were detected by visual inspection by using a polishing machine (LaboPol-5 manufactured by Marumoto Struers) and changing the abrasives and polishing cloths as described below.

Abrasive: Diamond abrasives (DP-Spray P series manufactured by Marumoto Struers)
Buff: Polishing cloths No. 773 (particle size, 10 $\mu$m or more) and No. 751 (particle size, less than 10 $\mu$m) manufactured by Marumoto Struers

To the buffs, the diamond abrasives SPRIR (particle size, 45 $\mu$m), SPRAM (particle size, 25 $\mu$m), SPRUF (particle size, 15 $\mu$m), SPRAC (particle size, 9 $\mu$m), SPRIX (particle size, 6 $\mu$m), SPRRET (particle size, 3 $\mu$m), SPRON (particle size, 1 $\mu$m), and SPRYT (particle size, 0.25 $\mu$m) were applied in this order so as to use the buffs for mirror finishing. The buffs were changed with the replacement of the abrasives.

A3) Mechanical polishing

A sample (5 cm x 5 cm) was adhered to a mirror finished metal block with a double sided adhesive tape (removable tape 9455 manufactured by Sumitomo 3M Limited). The sample was polished until no surface irregularities were detected by visual inspection by using a polisher (8-inch Si wafer manufactured by Shin-Etsu Chemical Co., Ltd.) and polishing films (Imperial lapping film sheets, type PSA manufactured by Sumitomo 3M Limited) with grit numbers #320, #600, #1000, #1200, #2000, #4000, #6000, #8000, #10000 and #15000, and changing the polishing films in order of grit number, from the lowest toward a higher.

A4) Electrolytic abrasive polishing

A sample (5 cm x 5 cm) was adhered to a mirror finished metal block with a double sided adhesive tape (removable tape 9455 manufactured by Sumitomo 3M Limited). The sample was polished by using a polishing machine (PIEP-10 manufactured by Corporate Sugiyama Shoji) at a main spindle rotation speed of 150 rpm, a main spindle oscillation frequency of 2 Hz, an X axis feed speed of 2 mm/sec, a pressing pressure of 50 g/cm$^2$, as well as an electrolysis power voltage of 1 v and electric current of 2 A (polishing area, 5 cm x 5 cm).
Abrasive slurries each having a concentration of 20 vol% were prepared by adding alumina abrasives of #40, #80, #400, #1000 and #1500 in 0.1 mol/L aqueous solutions of sodium nitrate, respectively.
The sample was polished until no surface irregularities were detected by visual inspection by changing the alumina abrasive slurries in order of abrasive grit number, from #40 toward a higher. The sample was finished by polishing with colloidal silica PL-3 having 0.1,mol/L of sodium nitrate added thereto.

B) Chemical polishing

Chemical polishing was conducted under conditions as shown in Table 15 below.

Table 15

| Phosphoric acid | Aluminum phosphate | Nitric acid | Water | Temp. | Time | Surface quality |
|---|---|---|---|---|---|---|
| 76% | 5.5% | 3.3% | 15.2% | 100°C | 120 sec. | Good |

C) Electrolytic polishing

Electrolytic polishing was conducted under following conditions.

85 wt% phosphoric acid (manufactured by Wako Pure Chemical Industries, Ltd.)     660 cc
Pure water     160 cc
Sulfuric acid     150 cc
Ethylene glycol     30 cc
Temperature:     70°C
Anode: sample
Cathode: carbon
Electrolysis: a constant current of electrolysis at 130 mA/cm$^2$ for 2 minutes
Power source: GP0110-30R (manufactured by Takasago, Ltd.)

D) Chemical mechanical polishing (CMP) method

The sample was polished on an ultraprecision polishing machine (MA-200D manufactured by Musasino Denshi Corporation) at a rotation speed of 50 rpm for 10 minutes using the following slurries, the coarser first. A 3 wt% aqueous solution of phosphoric acid was sprayed onto the sample as appropriate.

(1) Diamond slurry #2400000 having a particle size of 0.1 $\mu$m
(2) Aluminum oxide slurry having a particle size of 0.05 $\mu$m

E) Barrier layer removing method

The sample was subjected to anodic electrolysis in a solution at 50°C containing ammonium adipate at a concentration of 15 wt% until the voltage reached 100 V to form an anodized layer with no micropores which had a thickness of about 0.1 $\mu$m. The sample was then immersed in an aqueous solution of chromic acid (118 g of 85 wt% phosphoric acid, 30 g of anhydrous chromic acid, and 1500 g of pure water) at 50°C for 1 minute to remove the barrier layer and smoothen the surface.

Table 16

| Substrate No. | Mechanical polishing | | | Electrolytic-abrasive polishing | Chemical polishing | Electrolytic polishing | CMP | Barrier layer removing | Density of remaining blisters [/dm$^2$] | $R_a$ [μm] | Average glossiness [%] |
|---|---|---|---|---|---|---|---|---|---|---|---|
| | A1 | A2 | A3 | A4 | B | C | D | E | | | |
| 1 | Yes | - | - | - | - | - | - | - | 0 | 0.1 | 75 |
| 2 | - | Yes | - | - | - | - | - | - | 0 | 0.1 | 75 |
| 3 | - | - | Yes | - | - | - | - | - | 0 | 0.1 | 85 |
| 4 | - | - | - | Yes | - | - | - | - | 0 | 0.1 | 85 |
| 5 | Yes | Yes | Yes | - | Yes | - | - | - | 0 | 0.08 | 80 |
| 6 | Yes | Yes | Yes | - | - | Yes | - | - | 0 | 0.06 | 80 |
| 7 | Yes | Yes | Yes | - | Yes | - | Yes | - | 0 | 0.01 | 90 |
| 8 | Yes | Yes | Yes | - | - | Yes | Yes | - | 0 | 0.01 | 90 |
| 9 | Yes | Yes | Yes | - | Yes | - | - | Yes | 0 | 0.03 | 85 |
| 10 | Yes | Yes | Yes | - | - | Yes | - | Yes | 0 | 0.03 | 85 |
| 11 | - | - | - | Yes | - | - | - | - | 0 | 0.06 | 80 |
| 12 | - | - | - | Yes | - | - | Yes | - | 0 | 0.01 | 90 |
| 13 | - | - | - | Yes | - | - | - | Yes | 0 | 0.03 | 85 |
| 21 | - | - | - | - | - | - | - | - | 150 | 0.2 | 60 |
| 22 | - | - | - | - | - | Yes | - | - | 150 | 0.1 | 75 |

2. Evaluation of the polished surface

<Evaluation of Surface roughness>

The surface roughness $R_a$ was first measured with a contact-probe profilometer, and when $R_a$ was 0.1 $\mu$m or less, it was further measured with AFM. When $R_a$ in Table 16 is more than 0.1 $\mu$m, the surface roughness was measured with a sapphire probe having a tip radius of 10 $\mu$m, and in other cases, the surface roughness was measured with AFM.

(1) Measurement of $R_a$ with profilometer

$R_a$ was measured according to JIS-B601-1994.
$R_a$ was determined by folding the roughness curve at the centerline and dividing the area between the roughness curve and the centerline by the length L. $R_a$ is represented in micrometer ($\mu$m).

Model: SURFCOM 575A manufactured by Tokyo Seimitsu Co., Ltd.
Measurement conditions: Cut off, 0.8 mm; gradient correction, FLAT-ML; sampling length, 2.5 mm; T-speed, 0.3 mm/s; polarity, positive
Probe: sapphire probe having a tip radius of 10 $\mu$m

(2) Measurement of $R_a$ with AFM

When $R_a$ was 0.1 $\mu$m or less, $R_a$ was measured again with AFM (DFM cyclic contact mode).

Scanning area: 3000 nm
Scanning frequency: 0.5 Hz
Amplitude attenuation: -0.16
I gain: 0.0749; P gain: 0.0488
Q curve gain: 2.00
Vibrating voltage: 0.044 V
Resonance frequency : 318.5 kHz
Measurement frequency: 318.2 kHz
Vibration amplitude: 0.995 V
Q value: approx. 460
Measurement stylus: Si stylus having a tip diameter of 10 nm (cantilever SI DF40P manufactured by Seiko Instruments Inc.)

<Measurement of glossiness>

The glossiness was evaluated by measuring specular reflectance under the following conditions in accordance with JIS Z 8741-1997 "Method 3, 60 degree specular glossiness". The results are shown in Table 16.

Apparatus: $\Sigma$80 (VG-1D) manufactured by Nippon Denshoku Industries Co., Ltd

Measuring angle: 60 degrees

The measurement was conducted with the light path in both longitudinal and transverse directions parallel and perpendicular to the rolling direction, respectively, and the average was calculated.

[Examples 13 to 18 and Comparative Examples 3 to 5]

Nanostructures were produced by using the substrates 7 and 10 and the substrate 22 for comparison purpose.

[Anodizing treatment]

The sample was subjected to the following treatments after adhering a PET tape to the back side of the sample in order to prevent the back side (side not to be anodized) from being anodized.

<Self ordering treatment>

Table 17

| Conditions for self-ordering treatment | Electrolyte solution | Concentration [mol/L] | Temp. [°C] | Voltage [V] | Current density [A/dm$^2$] | Treatment time [hours] | Layer thickness [μm] |
|---|---|---|---|---|---|---|---|
| A | Sulfuric acid | 0.3 | 16 | 25 | 0.8 | 7 h | 70 |
| B | oxalic acid | 0.5 | 16 | 40 | 0.4 | 5 h | 60 |
| c | Phosphoric acid | 0.2 | 0 | 195 | 0.4 | 1 h | 15 |

<Layer removal treatment>

Phosphoric acid, anhydrous chromic acid, and water were mixed in line with the following formulation.

Table 18

| 85% phosphoric acid | Anhydrous chromic acid | Water | Temp. | Immersion time |
|---|---|---|---|---|
| 118 g | 30 g | 1500 g | 50°C | 10 hours |

<Main anodizing treatment>

The main anodizing treatment was conducted under the conditions shown in Table 19. The surface properties were measured as described below. The results are shown in Table 19. The layers produced by using the main anodizing treatment conditions A, B, and C were designated as main anodizing treatment layers A, B, and C, respectively.

<Evaluation of micropores>

The thus obtained structures were evaluated for average pore diameter and average pore interval of their micropores by image analysis of the surface photographs taken with an SEM.
Distance between adjacent pore centers was measured at 30 points in the SEM photograph (gradient, 0 degrees) taken with the FE-SEM adjusted to a magnification of 100,000 times depending on the pore diameter, and the average found was regarded as the average pore interval.
Contours of about 100 pores were traced on a transparent OHP sheet, and approximation to an equivalent circle diameter was performed by using an image analysis package (Image Factory (product name) manufactured by Asahi HiTech Co., Ltd.) so as to regard the found value as the average pore diameter.
As for the traced contours of about 100 pores, actual areas inside them were also measured, and pore density (/dm$^2$) was calculated by the following equation:

$$\texttt{Pore density = 100 / total actual area}$$

Table 19

| Conditions for main anodizing treatment | A | B | C |
|---|---|---|---|
| Electrolyte solution | Sulfuric acid | Oxalic acid | Phosphoric acid |
| Concentration | 0.3 M | 0.5 M | 0.2 M |
| Temperature | 16°C | 16°C | 2°C |
| Voltage | 25 V | 40 V | 195 V |
| Current density | 0.8 A/dm$^2$ | 0.4 A/dm$^2$ | 0.4 A/dm$^2$ |

(continued)

| Conditions for main anodizing treatment | A | B | C |
|---|---|---|---|
| Treatment time | 2 minutes | 4 minutes | 4 minutes |
| Layer thickness | 200 nm | 200 nm | 200 nm |
| Average pore diameter | 20 nm | 33 nm | 160 nm |
| Average pore interval | 63 nm | 100 nm | 500 nm |

<Pore widening treatment>

The anodized layer was dissolved under the following conditions to carry out uniform sealing treatment by electrolysis.

Table 20

| Treatment solution | Temperature | Time |
|---|---|---|
| 50 g/L phosphoric acid | 30°C | 15 minutes |

<Conditions for filling of the metal into the micropores>

1) Filling of Au

Electrodeposition was conducted by immersing the sample in an Au electrodeposition solution.
More specifically, the electrodeposition was conduced in an aqueous solution of $1_g/l$ $HAuCl_4$-$4H_2O$ and 7 g/l $H_2SO_4$ at 30°C by applying an AC voltage (adjusted with a slidax) of 11 V at 60 Hz for 10 seconds and using a Pt counter electrode.

2) Filling of Co

Electrodeposition was conducted by immersing the sample in a Cu electrodeposition solution.
More specifically, the electrodeposition was conduced in an electrolyte solution containing 5% $CoSO_4$-$7H_2O$ and 2% $H_3BO_3$ at room temperature by applying an AC voltage of 5 V.

<Evaluation of magnetism>

Stylus for the AFM was replaced with the one for magnetic force microscope (MFM), and the magnetism of the sample having Co electrodeposited thereto was measured by using a magnetization measuring system so set as to operate in the direction perpendicular to the sample. Measurement was carried out under the same conditions as those described above after applying the magnetic field to the sample until saturation. The results are shown in Table 21. The MFM is a microscope which uses a cantilever (stylus) coated with a magnetic material for monitoring magnetic properties (state of the magnetic domain, etc.) of the sample surface as the displacement of the cantilever and imaging the properties under non-contact mode measuring conditions.
Contrast is produced in the image being formed depending on whether the cantilever is attracted (image made darker) or repelled (made brighter) by the part where the magnetic material has been filled. Use of such principle has enabled to map the location of the magnetic material. In the relevant Examples, the part of the sample filled with the magnetic material attracted the cantilever, and was indicated by a darker region in the image.
Criteria for evaluating the magnetism:

Excellent: An area comprising 80% or more of the total pore area became dark.
Good: An area comprising 50% or more but less than 80% of the total pore area became dark.
Fair: An area comprising 10% or more but less than 40% of the total pore area became dark.
Poor: An area comprising less than 10% of the total pore area became dark.

Table 21

|  | Substrate | Main anodizing treatment layer | Metal filled into the micropores | Evaluation of magnetism (MFM) |
|---|---|---|---|---|
| Example 13 | 7 | B | Co | Good |
| Example 14 | 7 | c | Co | Excellent |
| Example 15 | 10 | B | Co | Good |
| Example 16 | 10 | C | Co | Excellent |
| Comparative Example 3 | 22 | B | Co | Poor |
| Comparative Example 4 | 22 | C | Co | Poor |

<Optical evaluation>

An adequate amount of rhodamine 6G was dropped onto the sample having Au electrodeposited thereto, and Raman scattering intensity was measured by a Raman spectrometer. The results are shown in Table 22.
Criteria for the optical evaluation:

Good: Raman signal was enhanced.

Fair: Raman signal was enhanced but only up to 1/10.

Poor: Raman signal was not detected.

Table 22

|  | Substrate | Main anodizing treatment layer | Metal filled into the micropores | Optical evaluation |
|---|---|---|---|---|
| Example 17 | 7 | A | Au | Good |
| Example 18 | 10 | A | Au | Good |
| Comparative Example 5 | 22 | A | Au | Fair |

[Example 19: Mold transfer method]

A positive-type electron beam resist (ZEP-520 (product name) manufactured by Zeon Corporation) was applied on a 3.5-inch silicon substrate to a thickness of 0.1 $\mu$m by using a spin coater. The substrate was cut into sections having a size of 1 cm x 1 cm with a glass cutter.

In an electron beam exposure system, the section was exposed to an electron beam with a diameter of about 30 nm at a regular interval so that the resulting projections will be arranged at an orthogonal lattice (square) with an interval of 100 nm (exposure area, 5 mm x 5 mm). The sample was then developed to form micropores in the resist.

Subsequently, chromium was deposited on the sample to a thickness of 50 nm by using an electron beam evaporator. The sample was then immersed in diglyme (a solvent) and sonicated to remove the chromium on the resist together with the resist itself and leave chromium projections each having a diameter of about 100 nm and a height of 50 nm.

The silicon substrate was then subjected to reactive dry etching with $CF_4$ gas by using these chromium projections as a mask so that it would be etched to a depth of 60 nm. The chromium was then removed with oxygen plasma to leave projections having a diameter of about 30 nm and a height of 60 nm which were arranged in orthogonal lattice at an interval of 100 nm. These silicon projections were pressed against the surface of substrate 4 having been produced as described before at a pressure of 3 tons/cm$^2$.

The substrate was then anodized under the main anodizing treatment conditions B to produce a structure having the anodized layer whose micropores were arranged at an orthogonal lattice at an average pore interval of 100 nm.

[Example 20: Electron releasing device]

The projections of the silicon mold were pressed against the substrate 4 having a size of 1 cm x 5 cm at a pressure of 3 tons/cm$^2$. The substrate was then anodized under the main anodizing treatment conditions B to produce a structure having the anodized layer whose micropores were arranged at an orthogonal lattice at an average pore interval of 100 nm.. In order to cause the micropores to extend through the barrier layer, a DC voltage of 0.1 V was applied to the structure in 5% phosphoric acid solution at 30°C and the structure was kept immersed until the current value reached 1 mA/dm$^2$ or higher, which took about 15 minutes. The structure was further plated by applying an AC voltage of 5 V for 1 second in an electrolyte solution containing 5% $CoSO_4 \cdot 7H_2O$ and 2% $H_3BO_3$ at room temperature to electrolytically deposit metal Co at the bottom of the barrier layer. After reducing with hydrogen, the structure was immersed in cyanuric acid so that the Co will act as a catalyst. The structure was placed in a reaction vessel which was a quartz tube (having a diameter of 50 mm and a length of 100 mm) having water cooling jackets connected to its upstream and downstream ends, respectively. A gas inlet tube was connected to the end of the upstream cooling jacket opposite with that connected to the quartz tube, and a gas outlet tube to the end of the downstream cooling jacket opposite with that connected to the quartz tube. The reaction tube was heated to a temperature of 380 to 420°C, and benzene/nitrogen mixture was allowed to flow through the quartz tube to promote the reaction.

When the structure was observed under SEM, the structure had carbon nanotubes developing from the Co catalyst.

This structure and an anode having a pohsphor were placed in a vacuum chamber so that they oppose with each other at an interval of 1 mm. When a voltage of 1 kV was applied, the phosphor started to emit light, and electron releasing current could be confirmed.

[Example 21: Photonic device]

The projections of the silicon mold were pressed against the substrate 4 having a size of 1 cm x 5 cm at a pressure of 3 tons/cm$^2$. The substrate was then anodized under the main anodizing treatment conditions B for 90 minutes to produce a structure having the anodized layer whose micropores were arranged at an orthogonal lattice at an average pore interval of 100 nm.. The anodized layer had a thickness of 4 $\mu$m. The sample was then immersed in a solution of 5% phosphoric acid at 30°C for 5 minutes to dissolve the interior of the micropores to thereby facilitate entrance of the resin monomer.

The micropores were filled with a methacrylate monomer in order to fill the micropores with dielectric PMMA. The monomer was polymerized at 60°C so as to fill the interior of the micropores with PMMA.

This structure was cut into sections of 1 cm x 1 cm, and a slice having a thickness of about 100 $\mu$m was produced with a microtome. This slice was attached to a PET base, and evaluated on a VIS-IR absorptiometer by transmission method. A strong absorption was observed at a wavelength 500 to 600 nm, which was absent in the sample produced with no pressing of the mold. This revealed that the sample had the property of a photonic crystal.

[Example 22: Light emitting device]

The projections of the silicon mold were pressed against the substrate 4 having a size of 1 cm x 5 cm at a pressure of 3 tons/cm$^2$. The substrate was then anodized under the main anodizing treatment conditions B to produce a structure having the anodized layer whose micropores were arranged at an orthogonal lattice at an average pore interval of 100 nm.. In order to cause the micropores to extend through the barrier layer, a DC voltage of 0.1 V was applied to the structure in 5% phosphoric acid solution at 30°C and the structure was kept immersed until the current value reached 1 mA/dm$^2$ or higher, which took about 15 minutes.

The structure was further plated by applying an AC voltage of 5 V for 1 second in an electrolyte solution containing 5% $CoSO_4 \cdot 7H_2O$ and 2% $H_3BO_3$ at room temperature to electrolytically deposit metal Co at the bottom of the barrier layer.

The structure was further immersed in an electrolyte solution composed of 0.1 M aqueous solution of zinc nitrate maintained at 60°C along with a Pt counter electrode, and a voltage of -0.8 V was applied to an Ag/AgCl reference electrode to thereby deposit Zn0 in the nanoholes.

When the structure was observed under SEM, deposition of ZnO in the micropores was found. When the structure was irradiated with He-Cd laser beam at a wavelength of 325 nm, a strong light emission was observed at a wavelength of approximately 400 nm, which was not observed for the substrate having ZnO deposited on Co under similar conditions. This indicated that the structure acts as a light emitting device.

## Claims

1. A method for producing a nanostructure comprising the steps of:

   polishing an aluminum substrate having an aluminum purity of at least 99.9% at least by mechanical polishing to an arithmetical mean roughness $R_a$ of 0.1 $\mu$m or less and a glossiness of at least 60%, and anodizing on the aluminum substrate to thereby produce a nanostructure provided in its surface with nanopores having an average pore diameter of 8-200 nm.

2. A method according to Claim 1, wherein the mechanical polishing is electrolytic-abrasive polishing.

3. A method according to Claim 1, wherein the mechanical polishing is performed using an abrasive.

4. A method according to Claim 3, wherein the abrasive is diamond or alumina.

5. A method according to Claim 1 or Claim 2, wherein the nanopores have an average pore interval of 23 to 600 nm.

6. A method according to Claim 5, wherein the nanopores have an average pore interval of 24 to 500 nm.

7. A method of manufacturing an electromagnetic device comprising the steps of:

   producing a nanostructure by the method as defined in any preceding Claim, and subjecting the nanostructure to a sealing treatment in which the nanopores of the anodized layer are filled with a metal material or a magnetic material.

## Patentansprüche

1. Verfahren zur Herstellung einer Nanostruktur, umfassend die Schritte:

   Polieren eines Aluminiumsubstrats mit einer Aluminiumreinheit von mindestens 99,9 % durch mindestens mechanisches Polieren zu einer arithmetischen mittleren Rauheit $R_a$ von 0,1 $\mu$m oder weniger und einem Glanz von mindestens 60°% und Anodisieren auf dem Aluminiumsubstrat, um hierdurch eine Nanostruktur herzustellen, die auf dessen Oberfläche mit Nanoporen versehen ist, die einen mittleren Porendurchmesser von 8 bis 200 nm aufweisen.

2. Verfahren gemäß Anspruch 1, worin das mechanische Polieren ein elektrolytisches Schleifpolieren ist.

3. Verfahren gemäß Anspruch 1, worin das mechanische Polieren unter Verwendung eines Schleifmittels durchgeführt wird.

4. Verfahren gemäß Anspruch 3, worin das Schleifmittel Diamant oder Aluminiumoxid ist.

5. Verfahren gemäß Anspruch 1 oder Anspruch 2, worin die Nanoporen einen mittleren Porenabstand von 23 bis 600 nm aufweisen.

6. Verfahren gemäß Anspruch 5, worin die Nanoporen einen mittleren Porenabstand von 24 bis 500 nm aufweisen.

7. Verfahren zur Herstellung einer elektromagnetischen Vorrichtung, umfassend die Schritte:

   Herstellen einer Nanostruktur mit dem Verfahren gemäß irgendeinem vorhergehenden Anspruch und Unterziehen der Nanostruktur unter eine Versiegelungsbehandlung, worin die Nanoporen der anodisierten Schicht mit einem Metallmaterial oder einem magnetischen Material gefüllt werden.

## Revendications

1. Procédé pour produire une nanostructure comprenant les étapes de :

polissage d'un substrat d'aluminium ayant une pureté d'aluminium d'au moins 99,9 % au moins par polissage mécanique jusqu'à une rugosité moyenne arithmétique Ra de 0,1 $\mu$m ou moins et un degré de brillance d'au moins 60 %, et

anodisation sur le substrat d'aluminium pour produire de ce fait une nanostructure munie dans sa surface de nanopores ayant un diamètre de pore moyen de 8 à 200 nm.

2. Procédé selon la revendication 1, dans lequel le polissage mécanique est un polissage électrolytique-abrasif.

3. Procédé selon la revendication 1, dans lequel le polissage mécanique est effectué en utilisant un abrasif.

4. Procédé selon la revendication 3, dans lequel l'abrasif est du diamant ou de l'alumine.

5. Procédé selon la revendication 1 ou la revendication 2, dans lequel les nanopores ont un intervalle de pore moyen de 23 à 600 nm.

6. Procédé selon la revendication 5, dans lequel les nanopores ont un intervalle de pore moyen de 24 à 500 nm.

7. Procédé de fabrication d'un dispositif électromagnétique comprenant les étapes de :

production d'une nanostructure par le procédé selon l'une quelconque des revendications précédentes, et soumission de la nanostructure à un traitement d'étanchéité dans lequel les nanopores de la couche anodisée sont remplis d'une matière métallique ou d'une matière magnétique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000031462 A
- JP 2003268592 A
- JP 61088495 A
- US 5747180 A
- US 20030109134 A
- US 20020145826 A
- US 6139713 A
- JP 3044377 B
- JP 3082040 B
- GB 526854 A
- GB 552638 A
- JP 128891 B
- JP S13004757 B
- JP 10121292 A
- JP 2001105400 A
- JP 2003129288 A
- JP 2000315785 A

### Non-patent literature cited in the description

- **MASUDA, H. et al.** *Jpn. J. Appl. Phys.,* 01 November 1998, vol. 37 (11A), L1340-1342
- Hyomen Gijutsu Binran. The Nikkan Kogyo Shimbun, Ltd, 1998, 490-553
- **MASUDA, H.** Highly ordered metal nanohole arrays based on anodized alumina. *Solid State Physics,* 1996, vol. 31 (5), 493-499
- **I. KARUBE et al.** *Analytica Chimica Acta,* 2001, vol. 434 (2), 223-230
- **TAKAYUKI OKAMOTO.** *Researches on interaction of metal nanoparticles and on biosensors,* 27 November 2003, http://www.plasmon.jp/reports/okamoto.pdf
- **MASUDA, HIDEKI et al.** *Appl. Phys. Lett.,* 10 November 1997, vol. 71 (19
- **MASUDA, H. et al.** *J. Electrochem. Soc.,* May 1997, vol. 144 (5), L127-L130
- New Practical Technology for Polishing. Ohmsha, Ltd, 1992, 55-93
- Surface Treatment of Aluminum. Uchida Rokakuho Publishing Co., Ltd, 1980, 36
- *Met. Ind.,* 1951, vol. 78, 89
- Handbook of Aluminum Technology. Kallos Publishing Co., Ltd, 1996
- Surface Treatment of Aluminum. Uchida Rokakuho Publishing Co., Ltd, 1980, 47
- **KAZUO MAEDA.** Introduction to Semiconductor Manufacturing Equipment. Kogyo Chosakai Publishing Co., Ltd, March 1999, 171
- New Theories on Anodized Aluminum. Kallos Publishing Co., Ltd, 1997, 16
- Abstract of 108th Lecture Meeting. The Surface Finishing Society of Japan, vol. 18-B2, 76-77
- **MASUDA, H. et al.** *J. Electrochem. Soc.,* May 1997, vol. 144 (5), L128
- **MASUDA, H. et al.** *Jpn. J. Appl. Phys.,* 1996, vol. 35 (1B), L126
- **MASUDA, H. et al.** *Appl. Phys. Lett.,* 10 November 1997, vol. 71 (19), 2771